Europäisches Patentamt

European Patent Office

Office européen des brevets

(19)

(11) **EP 1 134 065 A2**

(12) **EUROPEAN PATENT APPLICATION**

(43) Date of publication:
**19.09.2001 Bulletin 2001/38**

(51) Int Cl.⁷: **B29C 45/76**, G06F 17/50

(21) Application number: **01105601.7**

(22) Date of filing: **06.03.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **07.03.2000 JP 2000062092**

(71) Applicant: **Kao Corporation
Tokyo 103-8210 (JP)**

(72) Inventors:
• **Narushima, Takeshi**
  **Hagagun, Tochigi 321-34 (JP)**
• **Kimura, Tsuyoshi**
  **Hagagun, Tochigi 321-34 (JP)**
• **Nishimine, Naohide**
  **Hagagun, Tochigi 321-34 (JP)**

(74) Representative: **Grünecker, Kinkeldey,
Stockmair & Schwanhäusser Anwaltssozietät
Maximilianstrasse 58
80538 München (DE)**

(54) **Method and apparatus for designing molds, extruder dies and cores**

(57) Simulations are performed for (1) the change in shape of the molten resin when a parison is formed by extruding said resin through the gap between the extruder die and core, (2) the change in shape of the molten resin due to clamping the mold around the extruded parison and blowing compressed air into the parison, and (3) the thermal deformation that will occur in the molded product due to cooling after the molded product, obtained when the molten resin has solidified in the mold, is removed from the mold in a high-temperature state. The shapes of the mold, extruder die and core that will give the desired shape of molded product are determined from the results of these simulations.

FIG.2

EP 1 134 065 A2

**Description**

BACKGROUND OF THE INVENTION

1. Field of the Invention

The present invention relates to the design of molds, extruder dies and cores for plastic products.

2. Description of Related Art

A widely-practiced method of molding plastic is to extrude high-temperature molten plastic in a tubular shape, enclose this in a mold, and make the tube expand by blowing air into it. In this conventional method, after molten plastic in tubular shape, i.e. parison, has been arranged between the portions of a split mold, the mold is closed. When air is then blown into the molten plastic, the plastic adheres closely to the inner wall of the mold and assumes the same shape as this inner wall. The plastic is then cooled and solidified by continuing to blow in high-pressure air while keeping the plastic in the mold. This produces a molded product with the same shape as the mold. After cooling and solidification, the mold is opened and the molded product removed.

For example, when the molded product is a container (e.g., a bottle) which will be marketed after being filled with a liquid, the resin temperature at which the mold is opened is usually around 50 degrees centigrade, and a dozen or so seconds are required to cool the resin to this temperature. One way of achieving lower production cost would be to shorten the time taken for this cooling.

However, if the cooling time is shortened and the mold is opened while still at a high temperature, the high-temperature molten plastic shrinks greatly and undergoes non-linear deformation. As a result, the targeted molded product shape is not obtained. Hence it was previously impossible to shorten the cooling time.

The present inventors therefore invented a method and apparatus for mold design whereby a targeted molded product shape can be obtained even when the molded product is removed from the mold while still at a high temperature. This was achieved by using the finite element method to simulate deformation behavior and then taking this deformation into account when designing the shape of the mold (see Japanese Registered Patents Nos. 2955509 and 2957503).

This mold design method repeatedly performs the following steps: simulating the thermal deformation that will occur in the initial shape of a molded product (that is, its shape immediately after removal from a mold) after it has been removed from the mold; calculating, on the basis of this simulation, the difference between the deformed shape and the targeted shape of the molded product; comparing this difference with a threshold; and changing the aforementioned initial shape on the basis of this difference if the difference exceeds the threshold.

With this mold design method, the optimum mold shape for obtaining a desired shape of molded product is found by simulating how a given initial shape will change due to thermal shrinkage. However, molded products still actually have to be made and measured in order to obtain the product thickness distribution, and hence it is still necessary to repeatedly undertake trial manufacture of a test mold and then make molded products using this mold until the desired thickness distribution is obtained, and this is disadvantageous in terms of both cost and time. It is also necessary to undertake trial manufacture of numerous parison extrusion dies and cores in order to obtain the desired molded product thickness distribution.

SUMMARY OF THE INVENTION

In the light of this background, it is an object of the present invention to provide a method and apparatus for designing molds, extruder dies and cores that does not require trial manufacture.

According to a first aspect of the present invention there is provided a method for designing molds, extruder dies and cores, said method comprising: a first step of simulating the change in shape of the molten resin when a parison is formed by extruding said resin through the gap between the extruder die and core; a second step of simulating the change in shape of the molten resin due to clamping the mold around the extruded parison and blowing compressed air into the parison; a third step of simulating the thermal deformation that will occur in the molded product due to cooling after the molded product, obtained when the molten resin has solidified in the mold, is removed from the mold in a high-temperature state; and a fourth step of determining, from the results of the simulations of these first three steps, the shapes of the mold, extruder die and core that will give the desired shape of molded product.

The first step can include a step for obtaining the parison shape and parison thickness distribution by assigning values to the shape of the gap between the extruder die and core and to the physical properties of the resin. The second step can include a step for predicting deformation of the parison due to its being clamped and blown, and for obtaining the thickness distribution of the resin after it has been blown against the walls of the mold cavity. The third step can include a step for predicting shrinkage as a function of the thickness distribution obtained in the previous step.

The fourth step can include a step for obtaining, from the results of this shrinkage prediction, the mold shape that will give the desired shape of molded product.

Alternatively, the first step can include a step for obtaining the parison shape and thickness distribution by assigning values to the shape of the gap between the extruder die and core and to the physical properties of the resin; the second step can include a step for predicting deformation of the parison due to its being clamped and blown, and for obtaining the thickness distribution of the resin after it has been blown against the walls of the mold cavity; and the fourth step can include a step for evaluating, in terms of molded product strength and thermal deformation stability, the thickness distribution of the resin after it has been blown against the walls of the mold cavity, and for obtaining, on the basis of this evaluation, the shape of the extruder die and core that will give the optimum thickness distribution.

The step for obtaining the parison shape and thickness distribution preferably includes a step that uses the equations for fully-developed flow of a non-linear viscoelastic fluid to calculate the flow of the molten resin passing through the gap between the extruder die and core; and a step that assigns values to the strain of the molten resin after it has passed through this gap, and uses the equations for elastic recovery from elongation to calculate the behavior of the molten resin after it has passed through the gap.

Namely, it is preferable to calculate:

$$\left.\begin{array}{l} \dfrac{\partial p}{\partial r} = \dfrac{\partial \sigma}{\partial r} \\[2mm] \dfrac{\partial p}{\partial z} = \dfrac{1}{r}\dfrac{\partial}{\partial r}(r\tau) \end{array}\right\} \quad \tau = \dfrac{r}{2}\dfrac{\partial p}{\partial z} + \dfrac{c}{r}, \quad c = \text{const.}$$

$$\tau = \sum_j \tau_j \quad \left\{\begin{array}{l} \sigma_j + \dfrac{\alpha}{G_j}\left(\sigma_j^2 + \tau_j^2\right) = 0 \\[3mm] \tau_j - \lambda_j \dfrac{\partial v}{\partial r}\sigma_j + \dfrac{\alpha}{G_j}\tau_j\left(\sigma_j + \gamma_j\right) = G_j\lambda_j\dfrac{\partial v}{\partial r} \\[3mm] \gamma_j - 2\lambda_j\dfrac{\partial v}{\partial r}\tau_j + \dfrac{\alpha}{G_j}\left(\tau_j^2 + \gamma_j^2\right) = 0 \end{array}\right.$$

$$\text{boundary condition } v(R_{in}) = v(R_{out}) = 0, \text{ flow rate } Q = \int_{R_{in}}^{R_{out}} v \cdot 2\pi r\, dr$$

$$\dots(1)$$

as the fully-developed flow of the molten resin. The physical properties of the resin are preferably given in terms of a non-linear viscoelastic model. For example, they have been described using the Giesekus model. For present purposes, the direction of molten resin flow was taken as the z-axis and the radial direction as the r-axis. Stress $\sigma$ and velocity v were divided into their respective components, as shown in equation (2).

$$\text{total stress } \sigma = -p\delta + \tau, \text{ where } \quad p: \text{ pressure}$$
$$\tau: \text{ extra stress}$$

$$\mathbf{v} = \begin{pmatrix} v_r \\ v_z \end{pmatrix} = \begin{pmatrix} u \\ v \end{pmatrix}, \quad \tau = \begin{pmatrix} \tau_{rr} & \tau_{rz} \\ \tau_{zr} & \tau_{zz} \end{pmatrix} = \begin{pmatrix} \sigma & \tau \\ \tau & \gamma \end{pmatrix}$$

$$\tau = \sum_j \tau_j, \text{ where } \tau_j: \text{ extra stress in relaxation mode j}$$

$$\dots(2)$$

The resin property parameters are the relaxation time $\lambda_j$ and the relaxation modulus $G_j$ for relaxation mode j. The Giesekus model also requires a non-linear parameter $\alpha$ that is called the mobility factor.

According to a second aspect of the present invention there is provided an apparatus for designing molds, extruder dies and cores, said apparatus comprising first means for simulating the change in shape of the molten resin when a parison is formed by extruding said resin through the gap between the extruder die and core; second means for simulating the change in shape of the molten resin due to clamping the mold around the extruded parison and blowing compressed air into the parison; third means for simulating the thermal deformation that will occur in the molded product due to cooling after the molded product, obtained when the molten resin has solidified in the mold, is removed from the mold in a high-temperature state; and fourth means for determining, from the results of the simulations of these first three means, the shapes of the mold, extruder die and core that will give the desired shape of molded product.

BRIEF DESCRIPTION OF THE DRAWINGS

Specific embodiments of the present invention will now be described, by way of example only, with reference to the accompanying of drawings in which:

FIG. 1 is a flowchart of the blow molding process;
FIG. 2 is a flowchart of the method for designing molds, extruder dies and cores according to an embodiment of the invention;
FIG. 3 shows the shape of an extruder die and core;
FIGS. 4A to 4C show measured values of wall thickness after molding, and the corresponding simulation results;
FIG. 5 shows the configuration of die and core, and indicates the gaps $\Delta a$ and $\Delta b$ between the two;
FIG. 6 is a flowchart of the procedure for obtaining the shape of the extruder die and core that result in an approximately linear thermal deformation;
FIG. 7 is a block diagram of the main parts of a design apparatus according to an embodiment of the invention;
FIG. 8 gives an example of storage modulus and loss modulus values; and
FIG. 9 shows the locations to which the fundamental equations for the simulation of parison formation are applied.

DETAILED DESCRIPTION OF THE PREFERRED EMBODIMENTS

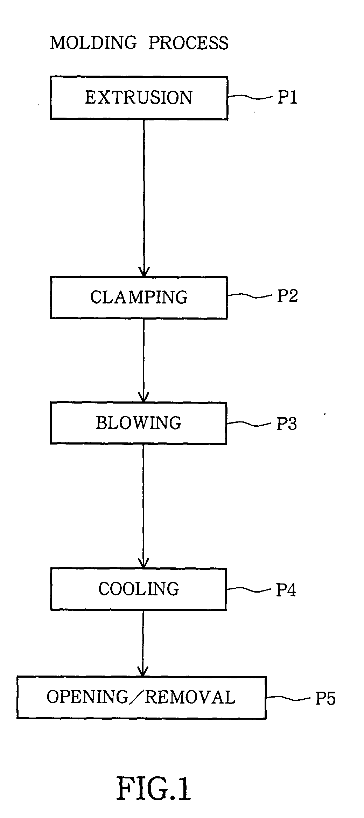

As indicated in FIG. 1, blow molding comprises the following processes: extruding molten resin through the gap between the extruder die and core to form a parison (P1); clamping the mold around the extruded parison (P2); blowing compressed air into the parison (P3), cooling the molten resin in the mold to solidify it (P4); and opening the mold and removing the molded product thereby obtained (P5). In the present invention, because the molded product is removed from the mold in a high-temperature state, it undergoes thermal deformation due to cooling.

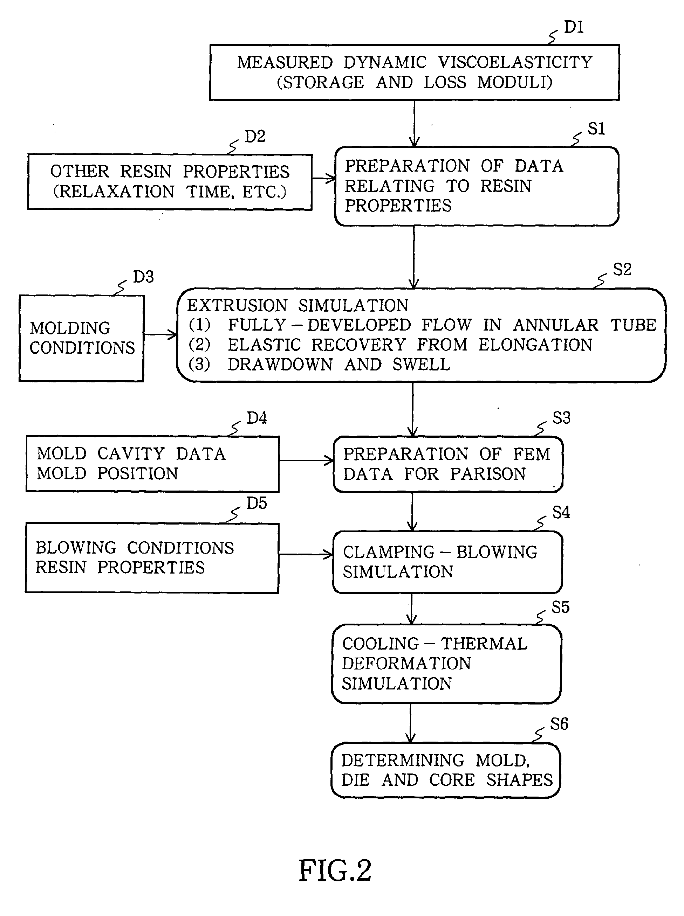

As shown in FIG. 2, the invention simulates each of these processes. Namely, data relating to resin properties are prepared (S1) from dynamic viscoelasticity data (D1) and from other physical properties of the resin (D2), and changes in the shape of the molten resin during extrusion (P1) are simulated (S2, hereinafter termed the "extrusion simulation") from this resin properties data and from the molding conditions (D3). Next, data for a finite element method (FEM) of the parison are prepared (S3) from data relating to the mold cavity shape and the mold pposition (D4), and changes in the shape of the molten resin during clamping (P2) and blowing (P3) are simulated (S4, hereinafter termed the "clamping-blowing simulation") from the FEM data and from data relating to blowing conditions and resin properties (D5). Next, the thermal deformation of the molded product after cooling (P4) and mold opening (P5) is simulated (S5, hereinafter termed the "cooling-thermal deformation simulation"). The mold, extruder die and core shapes that will give the desired shape of molded product are then determined from the results of these simulations (S6).

The extrusion simulation uses the equations for fully-developed flow of a fluid to calculate the flow of the molten resin passing through the gap between the extruder die and core; and after assigning values to the strain of the molten resin when it has passed through this gap, uses the equations for elastic recovery from elongation to calculate the behavior of the molten resin after it has passed through the gap. These two sets of equations will be described subsequently.

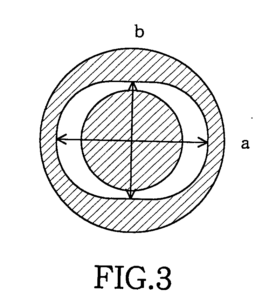

To determine the shape of the mold, and in particular the shape of the cavity, the cooling-thermal deformation simulation is repeated, and the shape that gives the best results is selected. To determine the shape of the extruder die and core, and in particular the shape of the gap formed between them as shown in FIG. 3, the extrusion simulation and the clamping-blowing simulation are used to determine the shape that will give the desired molded product thickness distribution.

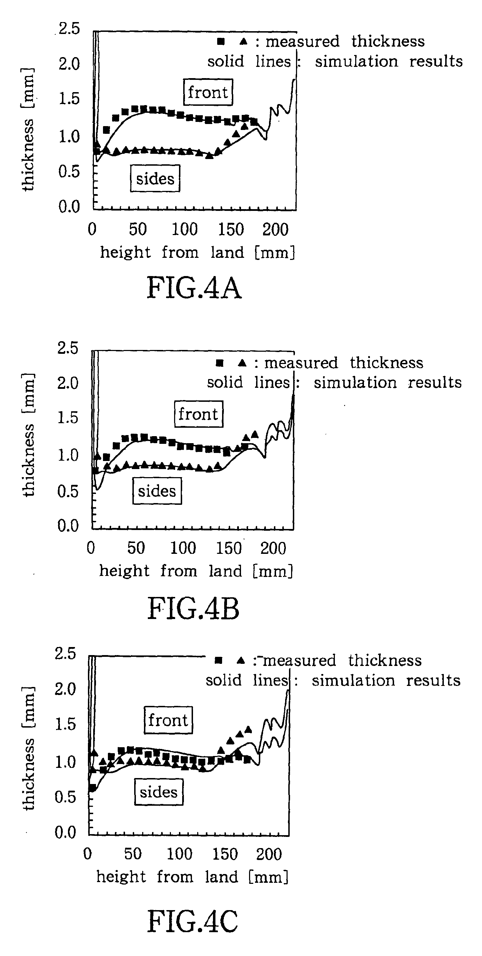

The three molding conditions indicated in Table 1 were employed. In each case, the outer diameter of the core was 16 mm. For molding condition A, a circular die of inner diameter 19 mm (a = b) was used; for molding condition B an oval die of 19.2 mm (a) x 19.0 mm (b) was employed; and for molding condition C an oval die of 19.4 mm (a) x 19.0 mm (b) was used, where a and b are defined in FIG. 3. In addition, in each case the molding cycle was 16.6 seconds, the parison length was 255 mm, the resin temperature was 200 degrees centigrade, and the blowing pressure was 0.57 MPa. These conditions gave the molding results shown in Table 2 and plotted in FIGS. 4A to 4C, which also give the simulation results, shown by the solid lines.

TABLE 1

| molding conditions | A | B | C |
|---|---|---|---|
| die [mm]<br>core [mm] | $\phi$19.0 | 19.2 x19.0<br>$\phi$16.0 | 19.4 x 19.0 |

TABLE 2

| Molding results | A | B | C |
|---|---|---|---|
| thickness distribution [mm] | shown in FIGS. 4A, 4B and 4C | | |
| container weight [g] | 51.17 | 52.17 | 53.78 |
| weight of upper flashes [g] | 1.94 | 2.03 | 2.12 |
| weight of lower flashes [g] | 3.21 | 2.62 | 2.96 |

The shape of the extruder die and core are selected by choosing, from the simulation results shown in FIGS. 4A to 4C, the set of results that approximates to the desired thickness distribution. These are normally chosen so that the thickness of the front, back and sides are approximately equal. The shape of the mold cavity is designed so that the targeted molded product shape is obtained when the cooling-thermal deformation is performed on the basis of this thickness distribution.

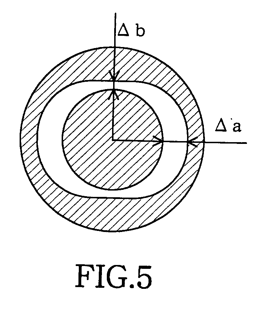

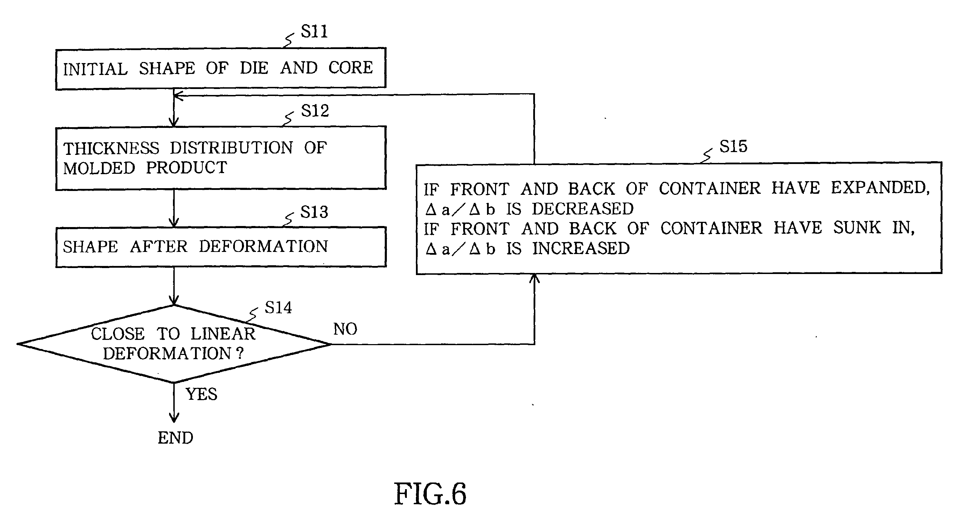

A die and core shape that gives a thermal deformation that is closer to linear deformation can be obtained after the above-mentioned selection of the extruder die and core shape, and before designing the mold cavity shape. This will be explained with reference to FIG. 5 and FIG. 6. FIG. 5 shows the configuration of the die and core and the gaps Δa and Δb between them. Gap Δa corresponds to the thickness of the sides of the molded product, while gap Δb corresponds to thickness of the front or back of the molded product. FIG. 6 shows the procedure employed to obtain a better die and core shape.

As shown in FIG. 6, the extruder die and core that were previously selected are used as the initial shape (S11) and the thickness distribution of the molded product is obtained by extrusion simulation and clamping-blowing simulation (S12). The cooling-thermal deformation simulation is then performed using this molded product thickness distribution, and the shape of the molded product after deformation is obtained (S13). It is then decided whether or not the deformation of the molded product is close to a linear deformation (S14). If it is not, and if the front and back of the molded product have expanded relative to the sides, the ratio Δa/Δb is decreased. On the other hand, if the front and back have sunk in relative to the sides, this ratio is increased (S15). Steps S11 to S15 are then repeated until the deformation approximates to a linear deformation.

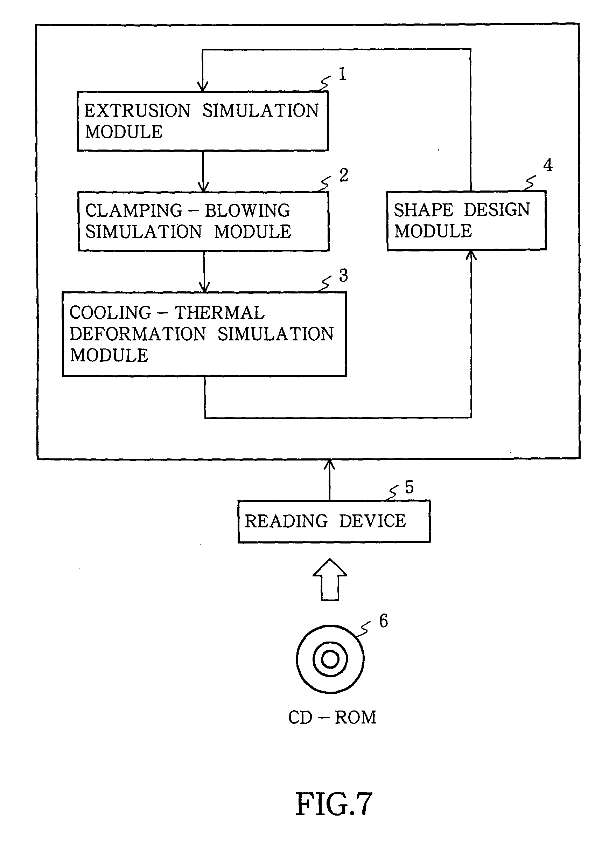

The method for designing molds and extruder dies and cores according to this invention is implemented by the design apparatus depicted in FIG. 7. This apparatus comprises extrusion simulation module 1 for simulating the change in shape of the molten resin when a parison is formed by extruding said resin through the gap between the extruder die and core; clamping-blowing simulation module 2 for simulating the change in shape of the molten resin due to clamping the mold around the extruded parison and blowing compressed air into the parison; cooling-thermal deformation simulation module 3 for simulating the thermal deformation that will occur in the molded product due to cooling after the molded product, obtained when the molten resin has solidified in the mold, is removed from the mold in a high-temperature state; and shape design module 4 for determining, from the results of these simulations, the extruder die and core shape that will result in approximately linear thermal deformation, and the mold shape that will give the desired shape of molded product. Shape design module 4 designs the shapes of the mold and of the extruder die and core by repeatedly performing the extrusion, clamping-blowing and cooling-thermal deformation simulations.

This design apparatus also comprises reading device 5, and by reading a program that has been written to a recording medium such as CD-ROM 6 and loading this program into a computer, the computer can be made to operate as a design apparatus for molds, extruder dies and cores according to this invention.

The flow of these various simulations will now be described with reference once again to FIG. 2. When measured values have been provided for the storage and loss moduli or for viscosity, the relaxation modulus can be calculated for each of the relaxation times set by the designer. The full set of data for the physical properties of the resin are then prepared by adding, to the relaxation times and elastic moduli that have been obtained, a parameter indicative of resin nonlinearity.

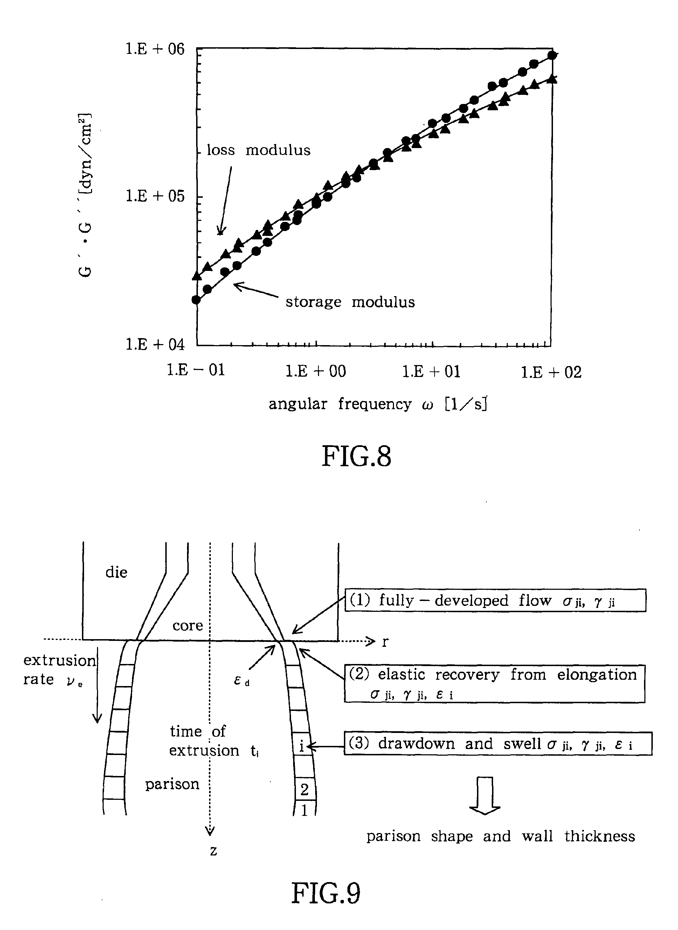

In FIG. 8, which gives an example of how the resin properties data are obtained, the measured values of the storage and loss moduli are shown respectively by the filled circles (●) and triangles (▲). The storage modulus G'(ω) and loss modulus G"(ω) can be expressed as follows:

$$G'(\omega) = \sum_{j=1}^{M} G_j \frac{\lambda_j^2 \omega^2}{1 + \lambda_j^2 \omega^2}, \quad G''(\omega) = \sum_{j=1}^{M} G_j \frac{\lambda_j \omega}{1 + \lambda_j^2 \omega^2}$$

$$...(3)$$

where M is the number of relaxation modes. Eleven relaxation modes were adopted in this embodiment. Using measured values for the storage and loss moduli, the method of least squares was employed to determine the relaxation modulus $G_j$ for a given relaxation time $\lambda_j$. The solid lines in FIG. 8 were calculated by substituting the values of $\lambda_j$ and $G_j$ obtained in this way into equation (3).

Parison formation is calculated after combining the molding conditions with the data derived for the physical properties of the resin. This calculation is split into three parts which are applied to different regions, as indicated in FIG. 9. These parts and regions are as follows.

(1) In the region where the molten resin flows through the extruder die, the equations for fully-developed flow are used and the flow is calculated on the basis of equation (1) given above, wherein subscript i is omitted in equation (1). This gives the normal stresses $\sigma_{ji}$ and $\gamma_{ji}$ acting in the die. The subscript i, which is omitted in equation (1), indicates a number of each element into which the parison is divided by a constant weight. The way in which the strain $\varepsilon_d$ within the die is obtained will be described subsequently. These values obtained for $\sigma_{ji}$ and $\gamma_{ji}$, and separately for $\varepsilon_d$, are used as the initial values in the subsequently applied equations for elastic recovery from elongation.

(2) In the region where the molten resin flows out from the extruder die, the equations for elastic recovery from elongation are used and parison formation is calculated as follows:

$$\tau_i = \sum_j \tau_{ji} \begin{cases} \dfrac{d\sigma_{ji}}{dt} = -(G_j + \sigma_{ji})\dfrac{d\varepsilon_i}{dt} \\[2mm] \dfrac{d\gamma_{ji}}{dt} = 2(G_j + \gamma_{ji})\dfrac{d\varepsilon_i}{dt} \end{cases}$$

$$\gamma_i - \sigma_i = \begin{cases} N_1 & t < t_i \\ \rho g v_e t_{i-1} e^{\varepsilon_i} & t > t_i \end{cases}$$

$$...(4)$$

where $N_1$ is the first normal stress difference occurring within the die, and is given by $N_1 = \gamma_i - \sigma_i$, the values of $\sigma i$ and $\gamma i$ being obtained from equation (1). $v_e$ is the velocity of extrusion of the molten resin from the die, and $t_i$ is the time during which element i is extruded. $\rho$ is the density of the molten resin and g is the gravitational acceleration. The normal stresses $\sigma_{ji}$ and $\gamma_{ji}$ and the strain $\varepsilon_i$ immediately after extrusion are found from equation (4).

(3) In the region where the parison hangs down, the equations for drawdown and swell are used and parison formation is calculated as follows:

$$\gamma_i - \sigma_i = \rho g v_e \ell_{i-1} \exp(\varepsilon_i)$$

$$\tau_i = \sum_j \tau_{ji} \quad \begin{cases} \sigma_{ji} + \lambda_j \left( \dfrac{d\sigma_{ji}}{dt} + \dfrac{d\varepsilon_i}{dt}\sigma_{ji} \right) + \dfrac{\alpha}{G_j}\sigma_{ji}^2 = -G_j\lambda_j\dfrac{d\varepsilon_i}{dt} \\[4mm] \gamma_{ji} + \lambda_j \left( \dfrac{d\gamma_{ji}}{dt} - 2\dfrac{d\varepsilon_i}{dt}\gamma_{ji} \right) + \dfrac{\alpha}{G_j}\gamma_{ji}^2 = 2G_j\lambda_j\dfrac{d\varepsilon_i}{dt} \end{cases}$$

$$...(5)$$

The shape and thickness of element i are determined on the basis of the strain $\varepsilon_i$ obtained here. The shape and thickness distribution of the entire parison are determined by combining the results for all the elements. The intra-die strain $\varepsilon$d mentioned above is determined so that the parison length obtained from equation (5) matches the target length. This is usually achieved by repeatedly calculating equations (1), (4) and (5).

The FEM data for the parison are prepared from the parison shape and thickness distribution derived as described above, and by combining with data relating to the mold and information relating to how the elements are divided up. The clamping-blowing simulation is run on this parison FEM data, after which the cooling-thermal deformation simulation is run. These simulations enable the extruder die and core to be designed so that the parison thermal deformation is nearly linear, and enable the mold to be designed to give the desired shape of molded product.
As has been explained above, by simulating molding processes on a computer, this invention enables molds and extruder dies and cores to be designed without trial manufacture.

**Claims**

1.   A method for designing molds, extruder dies and cores, said method comprising:

a first step of simulating the change in shape of the molten resin when a parison is formed by extruding said resin through the gap between the extruder die and core;
a second step of simulating the change in shape of the molten resin due to clamping the mold around the extruded parison and blowing compressed air into the parison;
a third step of simulating the thermal deformation that will occur in the molded product due to cooling after the molded product, obtained when the molten resin has solidified in the mold, is removed from the mold in a high-temperature state; and
a fourth step of determining, from the results of the simulations of these first three steps, the shapes of the mold, extruder die and core that will give the desired shape of molded product.

2.   A method for designing molds, extruder dies and cores claimed in Claim 1, wherein:

the first step includes a step for obtaining the parison shape and thickness distribution by assigning values to the shape of the gap between the extruder die and core and to the physical properties of the resin;
the second step includes a step for predicting deformation of the parison due to its being clamped and blown, and for obtaining the thickness distribution of the resin after it has been blown against the walls of the mold cavity;
the third step includes a step for predicting shrinkage as a function of the thickness distribution obtained; and
the fourth step includes a step for obtaining, from the results of this shrinkage prediction, the mold shape that will give the desired shape of molded product.

3.   A method for designing molds, extruder dies and cores claimed in Claim 1, wherein:

the first step includes a step for obtaining the parison shape and thickness distribution by assigning values to the shape of the gap between the extruder die and core and to the physical properties of the resin;
the second step includes a step for predicting deformation of the parison due to its being clamped and blown, and for obtaining the thickness distribution of the resin after it has been blown against the walls of the mold cavity; and

the fourth step includes a step for evaluating, in terms of molded product strength and thermal deformation stability, the thickness distribution of the resin after it has been blown against the walls of the mold cavity, and for obtaining, on the basis of this evaluation, the shape of the extruder die and core that will give the optimum thickness distribution.

4. A method for designing molds, extruder dies and cores claimed in Claim 2 or 3, wherein the step for obtaining the parison shape and thickness distribution includes:

a step that uses the equations for fully-developed flow of a non-linear viscoelastic fluid to calculate the flow of the molten resin passing through the gap between the extruder die and core; and
a step that assigns values to the strain of the molten resin when it has passed through this gap, and uses the equations for elastic recovery from elongation to calculate the behavior of the molten resin after it has passed through the gap.

5. An apparatus for designing molds, extruder dies and cores, said apparatus comprising:

first means for simulating the change in shape of the molten resin when a parison is formed by extruding said resin through the gap between the extruder die and core;
second means for simulating the change in shape of the molten resin due to clamping the mold around the extruded parison and blowing compressed air into the parison;
third means for simulating the thermal deformation that will occur in the molded product due to cooling after the molded product, obtained when the molten resin has solidified in the mold, is removed from the mold in a high-temperature state; and
fourth means for determining, from the results of the simulations of these first, second and third means, the shapes of the mold, extruder die and core that will give the desired shape of molded product.

MOLDING PROCESS

```
┌─────────────────┐
│    EXTRUSION    │ ── P1
└─────────────────┘
         │
         ▼
┌─────────────────┐
│    CLAMPING     │ ── P2
└─────────────────┘
         │
         ▼
┌─────────────────┐
│     BLOWING     │ ── P3
└─────────────────┘
         │
         ▼
┌─────────────────┐
│     COOLING     │ ── P4
└─────────────────┘
         │
         ▼
┌─────────────────────┐
│  OPENING / REMOVAL  │ ── P5
└─────────────────────┘
```

# FIG.1

EP 1 134 065 A2

MEASURED DYNAMIC VISCOELASTICITY
(STORAGE AND LOSS MODULI) — D1

OTHER RESIN PROPERTIES
(RELAXATION TIME, ETC.) — D2

PREPARATION OF DATA RELATING TO RESIN PROPERTIES — S1

MOLDING CONDITIONS — D3

EXTRUSION SIMULATION — S2
(1) FULLY – DEVELOPED FLOW IN ANNULAR TUBE
(2) ELASTIC RECOVERY FROM ELONGATION
(3) DRAWDOWN AND SWELL

MOLD CAVITY DATA MOLD POSITION — D4

PREPARATION OF FEM DATA FOR PARISON — S3

BLOWING CONDITIONS RESIN PROPERTIES — D5

CLAMPING – BLOWING SIMULATION — S4

COOLING – THERMAL DEFORMATION SIMULATION — S5

DETERMINING MOLD, DIE AND CORE SHAPES — S6

FIG.2

10

FIG.3

FIG.4A

FIG.4B

FIG.4C

FIG.5

FIG.6

```
                              ┌─ S11
    ┌──────────────────────────────────┐
    │ INITIAL SHAPE OF DIE AND CORE     │◄────────────────┐
    └──────────────────────────────────┘                 │
                    │          ┌─ S12                     │
                    ▼                                     │
    ┌──────────────────────────────────┐     ┌─ S15       │
    │ THICKNESS DISTRIBUTION OF         │  ┌──────────────────────────────────────────────┐
    │ MOLDED PRODUCT                    │  │ IF FRONT AND BACK OF CONTAINER HAVE EXPANDED, │
    └──────────────────────────────────┘  │ Δa/Δb IS DECREASED                            │
                    │          ┌─ S13      │ IF FRONT AND BACK OF CONTAINER HAVE SUNK IN,   │
                    ▼                      │ Δa/Δb IS INCREASED                            │
    ┌──────────────────────────────────┐  └──────────────────────────────────────────────┘
    │ SHAPE AFTER DEFORMATION           │                  ▲
    └──────────────────────────────────┘                  │
                    │          ┌─ S14                      │
                    ▼                                      │
          ╱──────────────────╲           NO               │
         ╱  CLOSE TO LINEAR    ╲──────────────────────────┘
         ╲  DEFORMATION ?      ╱
          ╲──────────────────╱
                    │ YES
                    ▼
                  END
```

FIG.6

EXTRUSION SIMULATION
MODULE 〜1

CLAMPING – BLOWING
SIMULATION MODULE 〜2

COOLING – THERMAL
DEFORMATION SIMULATION
MODULE 〜3

SHAPE DESIGN
MODULE 〜4

READING DEVICE 〜5

CD – ROM 〜6

FIG.7

FIG.8

FIG.9